# EUROPÄISCHE PATENTANMELDUNG

(11) **EP 2 165 615 A1**
(43) Veröffentlichungstag der Anmeldung: **24.03.2010**
(21) Anmeldenummer: 09170641.6
(22) Anmeldetag: 18.09.2009
(51) Int. Cl.: A42B 3/04, B62J 11/00

(54) **Helmschloss**

(30) Priorität: 22.09.2008 DE 102008042266; 13.10.2008 DE 102008042796
(71) Anmelder: Reithoffer, Stephan, 6373 Jochberg (AT)
(72) Erfinder: Reithoffer, Stephan, 6373 Jochberg (AT)
(74) Vertreter: Lermer, Christoph

(57) **Zusammenfassung**

Ein Helmschloss weist ein biegsames und geformtes Kabel 1 bestimmter Länge und Form 11 mit zwei Enden auf. Eines der Enden des Kabels 1 ist durch eine Befestigung 6 unlösbar fest an einem Schlossgehäuse 2 angebracht. Im Schlossgehäuse 2 sind ein Schloss 3 und ein Schließmechanismus 4 angeordnet. Am anderen Ende des Kabels 1 ist ein zum Schließmechanismus passender Verschlussbolzen 5 unlösbar angebracht. Die durch das Kabel 1 des Helmschlosses gebildete Schlinge 11 wird in einer bestimmten Position von einem Fixierungsring 7 umschlossen, welcher auf der Schlinge hinauf- und hinabgeschoben werden kann. Je nach Anwendung des Helmschlosses kann dieser Fixierungsring 7 aus hartem oder flexiblem Material bestehen.

## Beschreibung

### TECHNISCHES GEBIET

Die vorliegende Erfindung betrifft eine Vorrichtung zum Anschließen eines Gegenstands, insbesondere eines Helms mit einem Kopfteil und einem Kinnteil, eines Sportgeräts, etc., an eine Komponente, umfassend ein langgestrecktes Befestigungselement zum Umschließen der Komponente und wenigstens eines Teils des Gegenstands, wobei das Befestigungselement wenigstens zwei freie Enden aufweist; und einen Verschluss zur Verbindung und zum Lösen der zwei freien Enden des Befestigungselements.

### STAND DER TECHNIK

Bei vielen Fortbewegungsarten, wie z.B. beim Fahren mit einem einspurigen Fahrzeug oder beim Ausüben gewisser Extremsportarten soll zum Schutz der Akteure ein Sturzhelm getragen werden, meist ist dieser sogar Pflicht. Den besten Schutz bieten sogenannte Integralhelme, welche über ein Kopfteil und ein damit verbundenes stabiles Kinnteil verfügen. Der Augenbereich ist in der Regel von einem Visier abgedeckt, das geöffnet oder verschlossen werden kann.

Um den Helm bei Verlassen des Fahrzeugs, des Sportgeräts, etc., nicht mit sich führen zu müssen, bieten viele Fahrzeug- bzw. Gerätehersteller eine integrierte Möglichkeit, den Helmverschluss einzuhängen und zu verschließen. Meistens sind hierfür ein extra angebautes Schloss oder ein Haken unter der Sitzbank vorgesehen.

Befindet sich jedoch Gepäck auf der Sitzbank oder im Bereich dieser Absperrmöglichkeit, ist die Nutzung dieser Möglichkeiten entweder sehr umständlich, oder gar nicht mehr möglich. Außerdem werden von Dieben häufig die Helmverschlussriemen durchgeschnitten, wodurch bei dieser Methode der Helm relativ einfach entwendet werden kann.

Besser ist es, das Kinnteil mit einem Kabelschloss (z.B. Fahrradschloss o.ä.) an ein Fahrzeugteil (Rohr, Bügel etc.) abzusperren. Nachteilig bei dieser Methode ist aber, dass hierbei meist mehr als zwei Hände notwendig sind, weil das Kabelschloss beidhändig bedient, und gleichzeitig der Helm in Position gehalten werden muss. Weil diese Schlösser außerdem nicht für diesen Zweck entwickelt wurden, ist deren Schlossschlinge in der Regel zu groß, um einen Helm in stabiler Lage zu halten. Dadurch kann es zu Beschädigung des Helmes, oder des Fahrzeuges bzw. Gerätes kommen.

### AUFGABE DER ERFINDUNG

Ausgehend davon besteht die Aufgabe der vorliegenden Erfindung darin, eine Absperrvorrichtung mit besserer Handhabbarkeit und sicherem Verschluss für einen Gegenstand, insbesondere für einen Helm, Skier, etc., zu schaffen.

### TECHNISCHE LÖSUNG

Diese Aufgabe wird gelöst durch eine Absperrvorrichtung nach Anspruch 1. Vorteilhafte Ausführungsformen ergeben sich aus den Merkmalen der abhängigen Ansprüche.

Die erfindungsgemäße Vorrichtung zum Anschließen eines Gegenstands, insbesondere eines Helms mit einem Kopfteil und einem Kinnteil, eines Sportgeräts, etc., an eine Komponente umfasst: ein langgestrecktes Befestigungselement zum Umschließen der Komponente und wenigstens eines Teils des Gegenstands, wobei das Befestigungselement wenigstens zwei freie Enden aufweist; einen Verschluss zur Verbindung und zum Lösen der zwei freien Enden des Befestigungselements; wobei die Vorrichtung ein Fixierelement zum Fixieren des Befestigungselements an der Komponente aufweist. Das Befestigungselement ist gebogen und in eine etwa U-förmige Form (Schlinge bzw. Schlaufe) gebracht. Die freien Enden des Befestigungselements werden vom Fixierelement in einem bestimmten Abstan zusammen gehalten.

Die Vorrichtung ist somit als Helmschloss für Helme mit einem Kinnteil, die in der Regel ein Visier aufweisen, das geöffnet werden kann, einsetzbar. Die Komponente, an der das Helmschloss angeschlossen wird, kann ein Bauteil eines Zweirads sein, z.B. eine Stange. Das Befestigungselement umfasst insbesondere ein Kabel, das biegbar und flexibel ist, d.h. das Helmschloss ist als Kabelschloss konzipiert. Beim Biegen kann das Kabel eine der Biegung entgegen gerichtete elastische Kraft ausüben. Jedenfalls der für die Biegung zur Bildung einer Schlaufe vorgesehene Abschnitt des Befestigungselements sollte als Kabel oder aus einem anderen biegbaren, stabilen Material bestehen.

Das Schloss kann auch zum Anschließen anderer Gegenstände, z.B. von Sportgeräten wie Skiern, Skistöcken, Snowboards, etc., ausgebildet sein bzw. eingesetzt werden. Dabei kann durch das Fixierelement erreicht werden, dass das Schloss an der Komponente, an der der Gegenstand befestigt wird, fixiert wird, oder der Gegenstand selbst in einer bestimmten Position fixiert wird. Außerdem kann der Raum zwischen dem Fixierelement und dem Befestigungselement wahlweise vergrößert und verkleinert werden. Es kann auch einer der Skier vom Befestigungselement umgeben werden, während der andere Ski von einem Kabel, das eine Schlinge oder Schlaufe bildet, umschlossen wird. Am Schloss kann auch zusätzlich ein Kabel mit jeweils einer Schlaufe an jedem Ende befestigt werden, durch das weitere Gegenstände befestigt werden können.

Das Fixierelement kann eine offene oder geschlossene Klammer sein, die jedenfalls zwei Schenkel eines gebogenen Kabels in einem vorgegebenen Abstand halten kann.

Die Größe und die Form des Schlosses können für eine oder mehrere Verwendungen (z.B. Kombination Helmschloss/Skischloss) geeignet ausgebildet sein.

Erfindungsgemäß kann mittels des Fixierelements das Schloss (Skischloss, Helmschloss, etc.) noch vor dem Verschließen an der Komponente fixiert werden. Es ist somit nicht notwendig, die Vorrichtung festzuhalten, bevor und während das Kabel z.B. in das Kinnstück des Helms eingefädelt wird oder um Skier herum, z.B. zwischen Vorderteil und Rückteil der Bindung, gelegt wird. Vielmehr kann die Vorrichtung zumindest zeitweise losgelassen werden, ohne entlang der Komponente zu verrutschen. Dies erleichtert wesentlich die Handhabung des Helmschlosses. Das Fixierelement fixiert das Schloss vorzugsweise in einer Richtung quer bzw. im Wesentlichen senkrecht zur Fläche, die vom (insbesondere geschlossenen) Befestigungselement bestimmt wird. Das Fixierelement (auch Stabilisator) umschließt wenigstens teilweise die von einem Kabel gebildete Schlaufe. Es verhindert durch Ausüben einer Gegenkraft, dass das gebogene Kabel seine ursprüngliche Form annimmt. Durch die vom gebogenen Kabel erzeugten, auseinander gerichteten Kräfte drückt das Kabel gegen das Fixierelement, so dass dieses nicht in Richtung der Kabelenden gleiten kann.

Wenigstens der Teil des Fixierelements, der von den freien Enden abgewandt zur Komponente hingewandt ist kann mit einem Material hoher Reibung beschichtet oder aus diesem Material ausgebildet sein.

Insbesondere ist das Fixierelement entlang des Befestigungselements verschiebbar angeordnet. Die mit der Schlaufe in Kontakt stehenden Bereiche des Fixierelements können aus einem Material bestehen bzw. mit einem Material beschichtet sein, das gegenüber dem Kabel eine niedrige Reibung aufweist, so dass das Fixierelement leicht entlang der Schenkel der Schlaufe verschiebbar ist. Wird das Kabel gebogen und das Fixierelement über die Kabelschlaufe gebracht, übt das Kabel durch die Spannung eine Kraft auf das Fixierelement aus, die verhindert, dass sich das Fixierelement in Richtung der Kabelenden bewegt. Vielmehr bleibt das Fixierelement in seiner Position entlang der Schlaufe oder wird (bei entsprechend geringer Reibung) durch die Kabelspannung entgegen der Richtung der Kabelenden bewegt.

Das Fixierelement kann eine durch das Befestigungselement gebildete Schlinge (wenigstens teilweise) umgreifen.

Das Fixierelement ist vorzugsweise als Fixierungsring ausgebildet, der um eine durch das Befestigungselement gebildete Schlinge schiebbar ist. Der Ring muss jedoch nicht vollständig geschlossen sein. Außerdem muss der Ring keine kreisförmige Fläche einschließen, sondern kann in beliebiger Form ausgebildet sein.

Das Fixierelement weist insbesondere eine Öffnung auf, in die eine vom Befestigungselement gebildete Schlinge bzw. Schlaufe eingeführt werden kann.

Das Befestigungselement ist vorzugsweise derart elastisch und/oder verbiegbar ausgebildet, dass eine elastische Kraft dem Zusammenführen der freien Enden des Befestigungselements im geöffneten Zustand entgegen wirkt. In anderen Worten spreizen sich die Enden des Kabels auseinander, wenn keine Kraft auf sie einwirkt.

Die Vorrichtung ist vorzugsweise derart ausgebildet, dass die im geöffneten Zustand des Befestigungselements erzeugte elastische Kraft auf das über eine vom Befestigungselement gebildete Schleife bzw. Schlaufe geschobenes Fixierelement wirkt. Das Fixierelement wird durch diese nach außen wirkende Kraft entlang der Schlaufe verschoben, und zwar in die Richtung von den freien Enden der Schlaufe weg. In dieser Richtung verkleinert sich der Abstand der beiden Schenkel der Schlaufe unter dem Einfluss des die Schenkel zusammendrückenden Fixierelements.

Die elastische Kraft wirkt insbesondere so auf das Fixierelement, dass dieses wenigstens eine Kraftkomponente von den freien Enden des Befestigungselements weg erfährt.

Die elastische Kraft kann so auf das Fixierelement wirken, dass dieses durch die elastische Kraft in eine Richtung weg von den freien Enden des Befestigungselements bewegt wird. Lässt man dann die beiden Enden des Kabels los, wird das Fixierelement durch die freiwerdende Spannung des Kabels an die Komponente gedrückt. Dadurch wird das Helm- bzw. Skischloss in seiner Lage an der Komponente stabilisiert und muss nicht mehr gehalten werden.

Der Verschluss weist vorzugsweise wenigstens ein Schloss auf, beispielsweise ein Vorhängeschloss.

Der Verschluss kann wenigstens ein Gehäuse zur Aufnahme eines Schlosses aufweisen.

Das Schloss kann im Gehäuse aufgenommen sein.

Das Schloss kann beispielsweise herausnehmbar im Gehäuse aufgenommen sein.

Das Schloss kann auch im Gehäuse befestigt sein.

Das Fixierelement umschließt das Befestigungselement vorzugsweise und ist verschiebbar relativ zu diesem, wobei es von einer Position benachbart zum Gehäuse in eine Position entfernt vom Gehäuse verschiebbar ist.

Die Vorrichtung kann zudem wenigstens einen Abstandhalter aufweisen, der die vom Befestigungselement im geschlossenen Zustand umschlossene Fläche in einen ersten Öffnungsbereich und in einen zweiten Öffnungsbereich unterteilt.

Die Vorrichtung kann darüber hinaus wenigstens einen Stopper aufweisen, der zur Verhinderung eines Entfernens des Fixierelements an einem geschlossenen Abschnitt des Befestigungselements (Schlingenbeuge) angeordnet ist.

In einer besonders bevorzugten Ausführungsform kann die Länge des Befestigungselements variierbar sein. Durch die Längenverstellbarkeit des Befestigungselements kann dessen Länge an den Einsatzzweck angepasst werden. Die Länge des Befestigungselements kann z.B. durch Zusammensetzen mehrerer Kabelabschnitte, durch teleskopartiges Herausziehen eines Bügels aus einem Gehäuse, das z.B. mit einem Kabelabschnitt verbunden ist, etc.

In ähnlicher Weise kann der Abstand der Klammern, die die Kabelschenkel eines gebogenen Befestigungselements halten, variabel sein. So kann die Form der vom Befestigungselement gebildeten Schlaufe variiert werden.

### KURZE BESCHREIBUNG DER FIGUREN

Weitere Merkmale und Vorteile der Erfindung ergeben sich aus der nachfolgenden Beschreibung bevorzugter Ausführungsbeispiele anhand der Figuren. Im folgenden wird der Begriff Helmschloss verwendet, jedoch sollen die Ausführungsbeispiele auch auf andere Anwendungen übertragbar sein, z.B. könnte das Schloss auch als Skischloss, Snowboardschloss, etc., bezeichnet sein. Das Schloss kann von der Größe und Form her an einen oder mehrere Verwendungszwecke ausgebildet sein. Es zeigen die
Figur 1eine erste Ausführungsform eines erfindungsgemäßen Helmschlosses;
Figur 2eine zweite Ausführungsform eines erfindungsgemäßen Helmschlosses; und
Figur 3eine dritte Ausführungsform eines erfindungsgemäßen Helmschlosses.

### BESCHREIBUNG BEVORZUGTER AUSFÜHRUNGSBEISPIELE

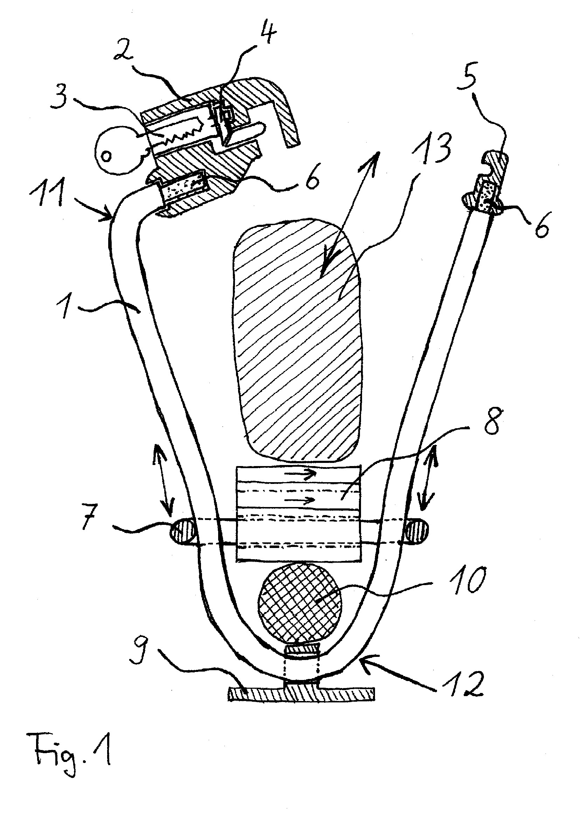

Das in der Figur 1 dargestellte Helmschloss weist ein biegsames und geformtes Kabel 1 bestimmter Länge und Form 11 mit zwei Enden auf. Die Länge und die Form 11 des Kabels 1 ergeben sich aus der Dimensionierung des Helmes und des Gegenstandes 10, an welchen angesperrt wird. Die Schlinge, welche das Helmschloss in verschlossenem Zustand bildet, soll einen möglichst stabilen Halt für den Helm geben.

Eines der Enden des Kabels 1 ist durch eine Befestigung 6 unlösbar fest an einem Schlossgehäuse 2 angebracht. Im Schlossgehäuse 2 sind ein Schloss 3 und ein Schließmechanismus 4 angeordnet. Am anderen Ende des Kabels 1 ist ein zum Schließmechanismus passender Verschlussbolzen 5 unlösbar angebracht. Die beiden Enden des Kabels 1 werden durch den Schließmechanismus 4 miteinander verbunden. Der Schließmechanismus kann aus festen Schlingen bestehen, die mit den Enden des Kabels gebildet werden können, oder aus einem anderen fest angebrachten Schließmechanismus 4.

Das Schlossgehäuse 2 soll so ausgeführt sein, dass das Schloss 3 durch die Gesichtsöffnung des Helms bequem bedient werden kann, wenn das Kabel 1 um das Kinnteil des Helms herumgelegt wurde.

Die durch das Kabel 1 des Helmschlosses gebildete Schlinge 11 wird erfindungsgemäß in einer bestimmten Position von einem Fixierungsring 7 umschlossen, welcher auf der Schlinge hinauf- und hinabgeschoben werden kann. Je nach Anwendung des Helmschlosses kann dieser Fixierungsring 7 aus hartem oder flexiblem Material bestehen.

An dem Fixierungsring 7 kann ein mehrlagiger Abstandhalter 8 angebracht sein, durch den der Platz innerhalb der Schlinge auf beiden Seiten des Fixierungsrings 7 verringert werden kann. Durch Entfernen des Abstandhalters 8 bzw. einzelner Lagen davon kann das Helmschloss an unterschiedlich große Kinnteile 13 verschiedener Helme und an die Dimensionen des Gegenstands 10, an dem der Helm befestigt werden soll, angepasst werden.

In der Schlingenbeuge 12 ist ein Abstreifverhinderer 9 befestigt, welcher verhindern soll, dass der Fixierungsring 7 vom Kabel 1 und der Schlinge 11 rutschen kann.

Möglichst alle Oberflächen des Helmschlosses sind zum Schutz ummantelt oder beschichtet. Bei Bauteilen, welche direkten Kontakt mit dem Gegenstand 10, z. B. einem Rahmenteil eines Motorrads, haben, ist eine rutschhemmende Oberfläche vorteilhaft, um einem Verrutschen des Helmschlosses entgegenzuwirken. So sind im vorliegenden Ausführungsbeispiel der Abstreifverhinderer 9, die Schlingenbeuge 12, der Abstandhalter 8 und/oder der Fixierungsring 7 rutschfest, z.B. aus Gummi, hergestellt bzw. beschichtet.

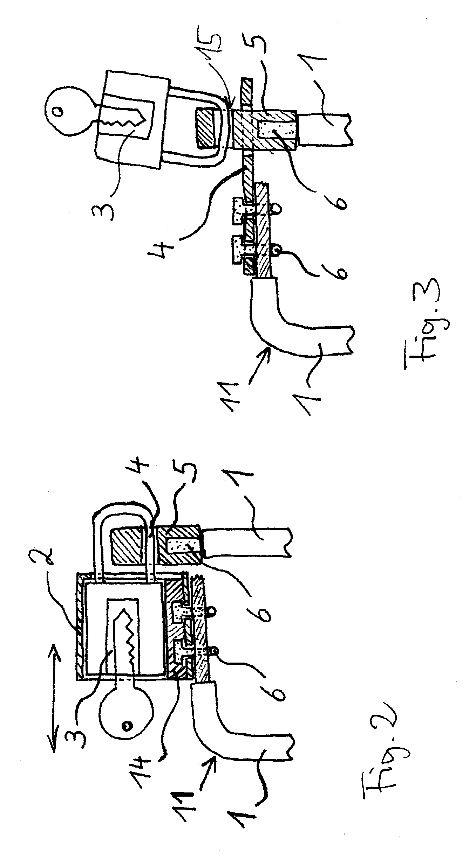

Im zweiten Ausführungsbeispiel gemäß Figur 2 ist ein Helmschloss mit fest angebrachtem Schlossgehäuse 2, aber auswechselbarem Schloss 3 dargestellt. Das Schloss 3 kann jedoch nur bei geöffnetem Helmschloss aus dem Gehäuse 2 entfernt werden und wird im Übrigen durch eine Ausfüllung 14 gut im Schlossgehäuse 2 gehalten. Als Schloss 3 kann ein übliches Vorhängeschloss verwendet werden, welches durch die Herausnahme für andere Zwecke genutzt, oder gewechselt werden kann. Es kann jedoch auch ein anderes, zum Schließmechanismus 4 passendes Schloss 3 verwendet werden.

Die Figur 3 zeigt ein Helmschloss ohne fest angebrachtes Schloss, wobei die beiden Enden der Schlinge 11 mit einem Verschlussmechanismus 4 versperrt werden können, wobei beispielsweise ein Bolzen 5 durch eine Öffnung 15 hindurchgeführt wird oder zwei Schlingen durch ein Schloss verbunden werden können. Beim Verschließen wird der Bügel eines Schlosses durch die Öffnung 15 geführt und das Schloss 3 verschlossen.

Die im Zusammenhang mit den Ausführungsbeispielen beschriebenen Merkmale sollen, soweit dies möglich ist, beliebig kombinierbar sein.

Das Helmschloss wird wie folgt bedient. Zunächst ist das Helmschloss verschlossen und der Fixierungsring 7 befindet sich in einer oberen Position benachbart zum Schlossgehäuse 2. Nun wird das Schloss 3 aufgesperrt und der Schließmechanismus 4 gibt den Verschlussbolzen 5 frei. Jetzt zieht man den Verschlussbolzen 5 durch den noch oben gehaltenen Fixierungsring 7. Somit ist die Seilschlinge geöffnet und das freie Ende des Kabels 1 mit dem Verschlussbolzen 5 kann um einen Gegenstand 10, z. B. eine Stange, geführt werden. Nun befindet sich der Gegenstand 10 innerhalb der Schlinge und der Verschlussbolzen 5 wird wieder zurück durch den Fixierungsring 7 geführt. Danach schiebt man den Fixierungsring 7 entlang der Schlinge hinab in Richtung des Gegenstands 10. Lässt man dann die beiden Enden des Kabels 1 los, wird der Fixierungsring 7 durch die freiwerdende Spannung des Kabels 1 an den Gegenstand 10 gedrückt. Dadurch wird das Helmschloss in seiner Lage am Gegenstand 10 stabilisiert und muss nicht mehr gehalten werden. Jetzt kann das Kinnteil 13 Helms in die offene Schlinge gebracht werden, bis es auf dem Fixierungsring 7 bzw. auf dem vorher bereits angepassten Abstandhalter 8 anliegt. Anschließend fasst der Benutzer durch die Gesichtsöffnung des Helmes und steckt den Verschlussbolzen 5 in den Schließmechanismus 4 und versperrt diesen mittels des Schlosses 3. Der Helm ist nun gegen Herunterfallen und Diebstahl gesichert.

## Patentansprüche

1. Vorrichtung zum Anschließen eines Gegenstands, insbesondere eines Helms mit einem Kopfteil und einem Kinnteil (13), eines Sportgeräts, etc., an eine Komponente (10), umfassend:
ein langgestrecktes Befestigungselement (1) zum Umschließen der Komponente (10) und wenigstens eines Teils des Gegenstands, wobei das Befestigungselement (1) wenigstens zwei freie Enden aufweist;
einen Verschluss (2, 3, 4, 5) zur Verbindung und zum Lösen der zwei freien Enden des Befestigungselements (1);
**dadurch gekennzeichnet, dass**
die Vorrichtung ein Fixierelement (7) zum Fixieren des Befestigungselements (1) an der Komponente (10) aufweist.

2. Vorrichtung nach Anspruch 1,
**dadurch gekennzeichnet, dass**
das Fixierelement (7) entlang des Befestigungselements (1) verschiebbar angeordnet ist.

3. Vorrichtung nach Anspruch 1 oder 2,
**dadurch gekennzeichnet, dass**
das Fixierelement (7) eine durch das Befestigungselement (1) gebildete Schlinge wenigstens teilweise umgreift.

4. Vorrichtung nach Anspruch 1 oder 2,
**dadurch gekennzeichnet, dass**
das Fixierelement (7) als Fixierungsring und/oder Klammer ausgebildet ist, der bzw. die um eine durch das Befestigungselement (1) gebildete Schlinge schiebbar ist.

5. Vorrichtung nach einem der vorhergehenden Ansprüche,
**dadurch gekennzeichnet, dass**
das Fixierelement (7) eine Öffnung aufweist, in die eine vom Befestigungselement (1) gebildete Schlinge eingeführt werden kann.

6. Vorrichtung nach einem der vorhergehenden Ansprüche,
**dadurch gekennzeichnet, dass**
das Befestigungselement (1) derart elastisch ausgebildet ist, dass eine elastische Kraft dem Zusammenführen der freien Enden des Befestigungselements (1) im geöffneten Zustand entgegen wirkt.

7. Vorrichtung nach Anspruch 6,
**dadurch gekennzeichnet, dass**
die Vorrichtung derart ausgebildet ist, dass die im geöffneten Zustand des Befestigungselements (1) erzeugte elastische Kraft auf das über eine vom Befestigungselement gebildete Schleife geschobenes Fixierelement (7) wirkt.

8. Vorrichtung nach Anspruch 7,
**dadurch gekennzeichnet, dass**
die elastische Kraft so auf das Fixierelement (7) wirkt, dass auf dieses wenigstens eine Kraftkomponente von den freien Enden des Befestigungselements (1) weg ausgeübt wird.

9. Vorrichtung nach Anspruch 8,
**dadurch gekennzeichnet, dass**
die elastische Kraft so auf das Fixierelement (7) wirkt, dass dieses durch die elastische Kraft in eine Richtung weg von den freien Enden des Befestigungselements (1) bewegt wird.

10. Vorrichtung nach einem der vorhergehenden Ansprüche,
**dadurch gekennzeichnet, dass**
der Verschluss (2, 3, 4, 5) wenigstens ein Schloss (3) aufweist.

11. Vorrichtung nach einem der vorhergehenden Ansprüche,
**dadurch gekennzeichnet, dass**
der Verschluss (2, 3, 4, 5) wenigstens ein Gehäuse (2) zur Aufnahme eines Schlosses aufweist.

12. Vorrichtung nach Anspruch 11,
**dadurch gekennzeichnet, dass**
das Schloss (3) insbesondere herausnehmbar im Gehäuse (2) aufgenommen ist.

13. Vorrichtung nach einem der vorhergehenden Ansprüche,
**dadurch gekennzeichnet, dass**
das Fixierelement (7) von einer Position benachbart zum Gehäuse (2) in eine Position entfernt vom Gehäuse (2) verschiebbar das Befestigungselement (1) wenigstens teilweise umklammert.

14. Vorrichtung nach einem der vorhergehenden Ansprüche,
**dadurch gekennzeichnet, dass**
die Vorrichtung wenigstens einen Abstandhalter (8) aufweist, der die vom Befestigungselement (1) im geschlossenen Zustand umschlossene Fläche in einen ersten Öffnungsbereich und in einen zweiten Öffnungsbereich unterteilt.

15. Vorrichtung nach einem der vorhergehenden Ansprüche,
**dadurch gekennzeichnet, dass**
die Vorrichtung wenigstens einen Stopper (9) aufweist, der zur Verhinderung eines Entfernens der Fixierelements (7) an einem geschlossenen Abschnitt des Befestigungselements (1) angeordnet ist.
